# EUROPEAN PATENT APPLICATION

(11) **EP 3 297 109 A1**
(43) Date of publication of application: **21.03.2018**
(21) Application number: 16189077.7
(22) Date of filing: 15.09.2016
(51) Int. Cl.: H02G 3/10

(54) **HOUSING DEVICE FOR ELECTRIC/ELECTRONIC EQUIPMENT**

(71) Applicant: ABB S.p.A., 20124 Milano (IT)
(72) Inventor: Colombo, Franco, I-21046 Malnate (CO) (IT); Mariani, Diego, I-20010 Vittuone (MI) (IT)
(74) Representative: Giavarini, Francesco

(57) **Abstract**

A housing device for electric/electronic equipment comprising a fixing plate suitable to be fixed onto a supporting surface and a casing aimed at housing electric/electronic equipment. Fixing means are provided on the fixing plate for fixing it onto said supporting surface. The fixing plate and the casing are provided with coupling means for coupling with each other in a first, operative, position or in a second, installation, position.

## Description

The present invention relates to a housing device for electric/electronic equipment having improved fixing/securing means. In particular, the present invention relates to a housing device for electric/electronic equipment comprising a fixing plate and a casing aimed at housing electric/electronic equipment, said fixing plate and said casing being provided with improved fixing/securing means.

Electric/electronic equipment and apparatuses used in building automation and similar applications - e.g. anti-burglar systems, home automation systems, communication systems and devices, and similar - are normally housed in casing (dedicated or shared with other equipment/apparatuses) which are normally fixed on a supporting surface, generally a wall of the building, in correspondence of the related cabling systems. The casing can be fixed directly to the wall or through supporting systems such as brackets or similar means.

In both cases, the fixing of the casing should be secure and reliable and the casing itself should not be easily removable from the support (either the wall or the supporting system).

One of the problem commonly faced during installation electric/electronic equipment and apparatuses is given by the connection operations of such equipment/apparatuses with the cabling system of the building. Normally the cabling systems are housed in cable ducts inside the wall and the relevant connections of the cables with the related equipment take place in correspondence of the outlet of said ducts. Therefore, the operation of connection of the cables is normally cumbersome as it requires the operators to support with one hand the casing while making the connection with the other hand. This is particular difficult when the installation electric/electronic equipment and apparatuses are positioned in hidden recesses or at an height, i.e. in places difficult to reach.

Hence, the present disclosure is aimed at providing a housing device for electric/electronic equipment, which allows overcoming at least some of the above mentioned shortcomings.

In particular, the present disclosure is aimed at providing a housing device for electric/electronic equipment in which the fixing of said device to a supporting structure is secure and reliable. Moreover, the present disclosure is aimed at providing a housing device for electric/electronic equipment in which the installation operations of said device are easy and quick.

Thus, the present invention relates to a housing device for electric/electronic equipment which comprises a fixing plate suitable to be fixed onto a supporting surface and a casing aimed at housing electric/electronic equipment. The housing device according to the present invention is characterized in that said fixing plate is provided with a first coupling surface with said casing having at least an opening for the passage of a connection system for said electric/electronic equipment; the fixing plate further comprises first fixing means for fixing it onto said supporting surface and first and second coupling means for coupling with said casing. The housing device according to the present invention is further characterized in that said casing comprises a base and a cover, said base having a second coupling surface that can be coupled to said first coupling surface of said fixing plate; the casing further comprises third and fourth coupling means for coupling with said fixing plate. Furthermore, the casing and the fixing plate are connectable to each other in a first, operative, position in which said first and second coupling surfaces are coupled to each other and said first and second coupling means are respectively coupled with said third and fourth coupling means, the coupling between said second and fourth coupling means preventing the un-coupling between said first and third coupling means, and in a second, installation, position in which said first and fourth coupling means are coupled to each other, said casing is supported by said fixing plate and said first and second coupling surfaces are substantially perpendicular to each other.

In practice, as better explained in the following description, the housing device for electric/electronic equipment according to the invention is provided with coupling means between the fixing plate and the casing which allow a secure and reliable connection between them under operating conditions (i.e., when the device is installed).

Moreover, the housing device for electric/electronic equipment according to the present invention allows for a quick and easy installation thereof, thanks to the possibility of supporting the casing onto the fixing plate during installation, thereby allowing the operator to use both hands for making the cabling and installation operations.

In practice, as better explained in the detailed description, the presence and the positioning of the fixing means on the fixing plate and the base of the casing allows a secure coupling between the fixing plate and the base of the casing in their operative position as well as a convenient positioning of the casing with respect to the fixing plate during installation or maintenance of the device.

For the purposes of the present invention the term "electric/electronic equipment" is meant to indicate any apparatus used in building automation and similar applications - such as anti-burglar systems, home automation systems, communication systems and devices, security home systems and similar systems and devices.

Preferably the coupling between said second and fourth coupling means is possible only when the coupling between said first and third coupling means is completed.

According to a preferred embodiment of the housing device for electric/electronic equipment according to the present invention, said first coupling means are positioned on said first coupling surface and said second coupling means are positioned on an edge portion of said fixing plate; moreover said third coupling means are conveniently positioned on said second coupling surface and said fourth coupling means are positioned on an edge portion of said base of said casing.

As an example, said first fixing means may comprise one or more elongated slots. Retaining means, such as screws or similar means, can be used to fix the fixing plate thorough the slots to the supporting surface, e.g. a wall of the building. The elongated shape of the slots allows a proper alignment of the fixing plate in the horizontal and/or vertical direction.

In a preferred embodiment of the housing device for electric/electronic equipment according to the present invention, the first coupling means (positioned on the fixing plate) comprise a shaped slot and the third coupling means (positioned on the base of the casing) comprises a snap-lock device slidingly engageable in said shaped slot.

In such a case said third coupling means may preferably comprise a pin with a head engageable in said shaped slot which has a first portion larger than said head and a second portion narrower than said head. The base is therefore engaged into the fixing plate by introducing the head of the pin into the larger portion of the slot and is then secured onto the fixing plate by sliding the pin into the slot.

In a particular embodiment of the housing device for electric/electronic equipment according to the present invention, the fourth coupling means (positioned on the base of the casing) comprises a cam and groove device, while the second coupling means (positioned on the fixing plate) comprises a seat for said cam and groove device. In such a case, the cam and groove device is movable between a first position in which it is not engaged with said seat and a second position in which it is engaged with said seat.

More in particular, said cam and groove device may have an elongated body with a first end larger than the rest of the body and a second end engageable with said seat, a groove being present on an intermediate portion of said elongated body between said first and second end thereof.

In such a case, said cam and groove device may conveniently comprise a guiding pin fixed on said base of said casing coupled with said grove for guiding and maintaining into position said device. Moreover, the cam and groove device may conveniently comprise also spring means forcing said device toward the exterior of said base.

According to preferred embodiments of the housing device for electric/electronic equipment according to the present invention, said cam and groove device may have an enlarged head protruding from said base when said cam and groove device is in said first position in which it is not engaged with said seat.

In such a case, the enlarged head of said cam and groove device is conveniently connectable with said first coupling means of said fixing plate in order to realize said second, installation, position.

In general, said fourth coupling means may advantageously comprise actuating means for their actuation by an operator. For instance, in case of a cam and groove device, the head thereof can be provided with means for coupling with a screwdriver or an Allen key or similar other devices. Specifically designed heads, tailored to be used with specific tools, can conveniently be used so as to prevent, or at least make it more difficult, an unauthorized removal intervention. Further features and advantages of the present invention will be more clear from the description of preferred but not exclusive embodiments of a housing device for electric/electronic equipment according to the invention, shown by way of examples in the accompanying drawings, wherein:

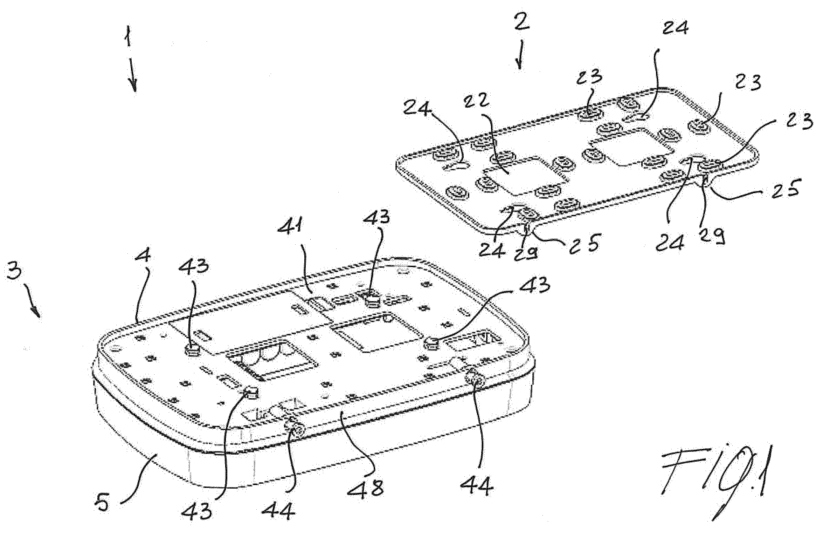

- Figure 1 is a perspective view of an embodiment of a housing device for electric/electronic equipment according to the invention;
- Figure 2 is a view of an embodiment of a fixing plate in a housing device for electric/electronic equipment according to the invention;
- Figure 3 is a perspective view of a detail of an embodiment of a housing device for electric/electronic equipment according to the invention;
- Figures 4 shows an enlarged detail of the second and fourth coupling means of a housing device for electric/electronic equipment according to the invention in a first position (not engaged);
- Figure 5 shows an enlarged detail of the second and fourth coupling means of a housing device for electric/electronic equipment according to the invention in a second position (engaged);
- Figure 6 is a section view of the embodiment of figure 5;
- Figure 7 is a perspective view of an embodiment of a housing device for electric/electronic equipment according to the invention in a first, operative, position;
- Figure 8 is a plane view of an embodiment of a housing device for electric/electronic equipment according to the invention in a first, operative, position;
- Figure 9 is a perspective view of an embodiment of a housing device for electric/electronic equipment according to the invention in a second, installation, position;
- Figure 10 is a perspective view of an embodiment of a housing device for
   electric/electronic equipment according to the invention in a second, installation, position. With reference to the attached figures, a housing device for electric/electronic equipment according to the present invention - designated with the reference numeral 1 - in its more general definition comprises a fixing plate 2 which is suitable to be fixed onto a supporting surface, for instance a wall of a building. The housing device 1 further comprises a casing 3 inside which various electric/electronic equipment and apparatuses can be housed.

One of the characterizing features of the housing device of the present invention is given by the fixing plate 2 which is provided with a first coupling surface 21 with said casing 3. The first coupling surface 21 is provided with at least an opening 22 for the passage of a connection system for said electric/electronic equipment. In practice, the opening 22 allows connecting the cabling system of the building to the relevant electric/electronic apparatus(es) housed inside the casing 3.

The fixing plate 2 further comprises first fixing means 23 for fixing it onto a supporting surface, as well as first 24 and second 25 coupling means for coupling with said casing 3, as better explained hereinafter.

A further characterizing feature of the housing device of the present invention is given by the casing 3, which generally comprises a base 4 and a cover 5. In particular, said base 4 has a second coupling surface 41 that can be coupled to said first coupling surface 21 of said fixing plate 2.

The casing 3 further comprises third 43 and fourth 44 coupling means for coupling with the fixing plate 2. Differently from housing device of known type, the casing 3 and the fixing plate 2 can be connected to each other in at least two different positions.

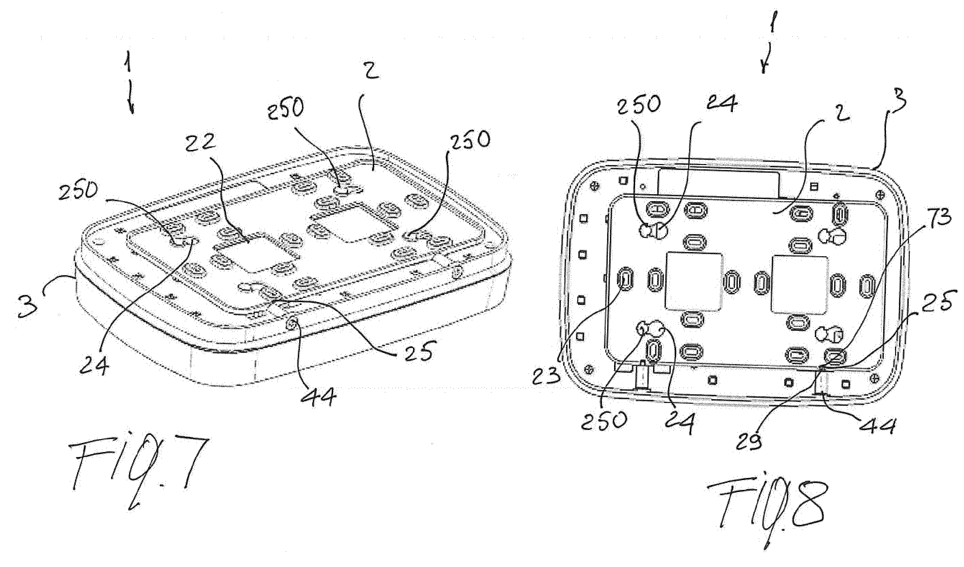

In particular, with reference to figures 7 and 8, the casing 3 and the fixing plate 2 can be connected to each other in a first, operative, position in which said first 21 and second 41 coupling surfaces are coupled to each other and said first 24 and second 25 coupling means are respectively coupled with said third 43 and fourth 44 coupling means. One of the important features of the housing device of the present invention, resides in that the coupling between said second 25 and fourth 44 coupling means prevents the un-coupling between said first 24 and third 43 coupling means. In other words, the first 24 and third 43 coupling means provide for a reliable mechanical connection between the fixing plate 2 and the casing 3, while the second 25 and fourth 44 coupling means have the main purpose of avoiding any undesired or unauthorized un-coupling between the first 24 and third 43 coupling means, and therefore between the casing 3 and the fixing plate 2.

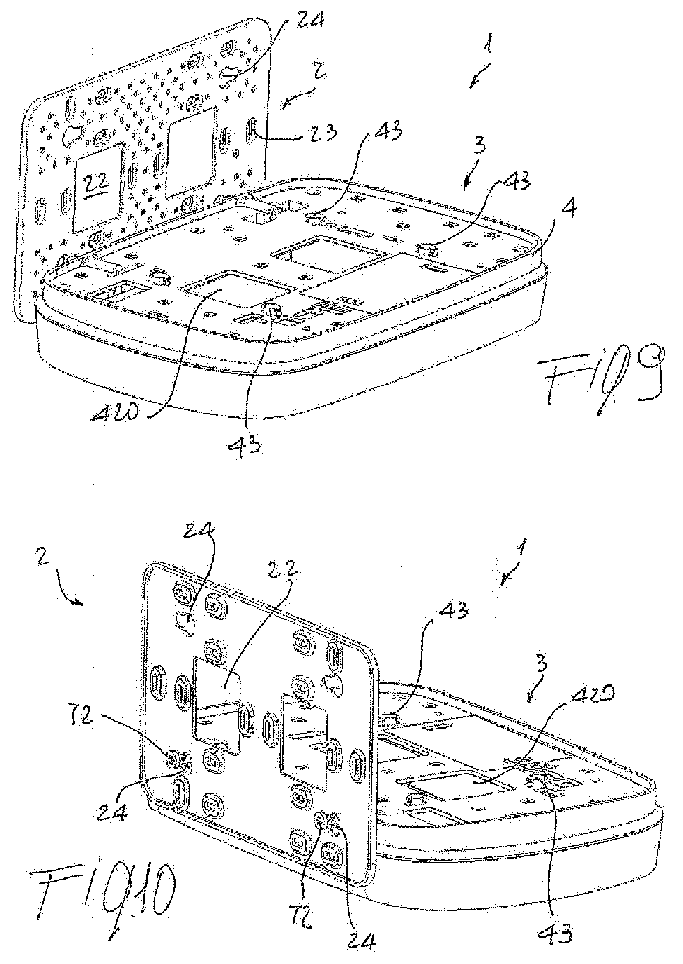

Then, with reference to figures 9 and 10, the casing 3 and the fixing plate 2 can also be connected to each other in a second, installation, position in which the first coupling means 24 are connected to the fourth coupling means 44 (instead of to the third 43 coupling means as in the previous case). In such a configuration, the mechanical connection between the first 24 and fourth 44 coupling means ensures a proper mechanical support to the casing 3 which in practice is supported by the fixing plate 2 in a relative positioning such that said first 21 and second 41 coupling surfaces are substantially perpendicular to each other. In this way, the operator during installation of the device 1 has easy access to both the cabling system of the building (through the opening 22 of the fixing plate 2) and the electric/electronic equipment inside the casing 3 (through one or more openings 420 in the second coupling surface 41 of the base 4).

Therefore, differently from the conventional housing device for electric/electronic apparatuses, the operator does need a further surface where to place the device during the operations of cables connection and does not need to hold it with a hand during such operations, thereby making the installation procedure easier and quicker

Such different relative positioning of the fixing plate 2 and casing 3 during installation and normal operation can be achieve, for instance, by positioning said first coupling means 24 on said first coupling surface 21 and said second coupling means 25 on an edge portion 28 of said fixing plate 2, while, for what concerns the casing 3, it can be achieve by positioning said third coupling means 43 on said second coupling surface 41 and said fourth coupling means 44 on an edge portion 48 of said base 4 of said casing 3. Being that the fourth coupling means 44 can be coupled with the second coupling means 25 or with the first coupling means 24, the two different relative positions of the fixing plate 2 and casing 3 (operation or installation) can be easily achieved.

As shown in the attached figures, the first fixing means may be, for instance, a number of elongated slots 23 through which retaining means, such as screws or similar means, can be inserted to fix the fixing plate 2 to the supporting surface, e.g. a wall of the building. As previously explained, the elongated shape of the slots allows a proper alignment of the fixing plate in the horizontal and/or vertical direction.

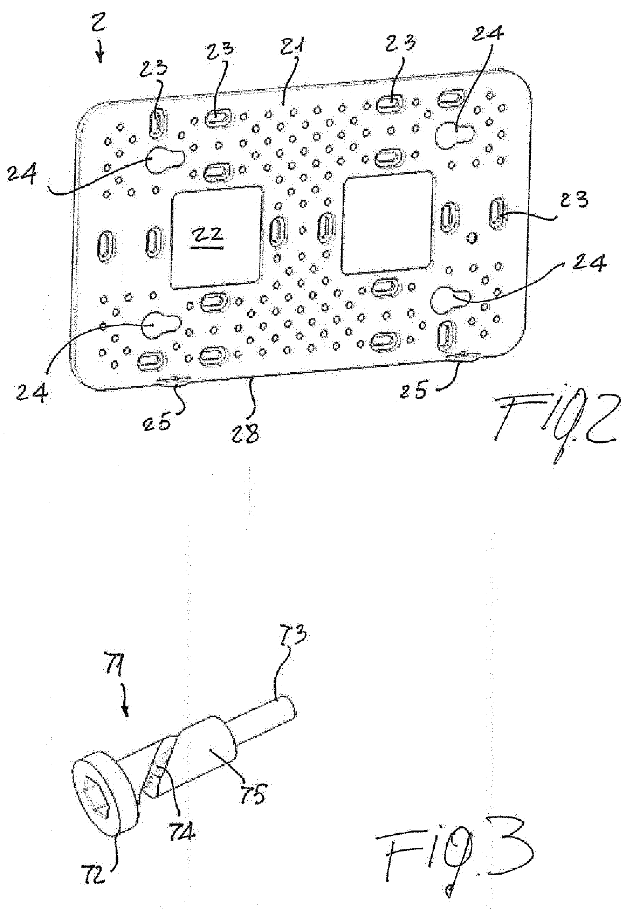

As clearly shown in figure 2, in a convenient embodiment of the housing device 1 for electric/electronic equipment according to the present invention, the first coupling means 24 may be, for instance, a number of shaped slot while the third coupling means 43 may be a corresponding number of snap-lock device slidingly engageable in said shaped slot.

In particular, in such a case and with reference to figures 7 and 8, the third coupling means 43 may comprise a pin with a head 250 engageable in said shaped slot 24 which has a first portion larger than said head 250 and a second portion narrower than said head 250. The connection operation is therefore carried out by first engaging the base 4 of the casing 3 into the fixing plate 2 by introducing the head 250 of the pin into the larger portion of the slot 24 and then securing the base 4 onto the fixing plate 2 by sliding the pin into the slot 24.

In general, when the coupling takes place, it is preferable to carry out the coupling between said second 25 and fourth 44 coupling means only when the coupling between said first 24 and third 43 coupling means is completed. In other words, and in particular when the coupling takes place with an insertion/sliding sequence, it is preferable to carry out first the mechanical connection between fixing plate 2 and casing 3 by coupling together the first 24 and third 43 coupling means, and thereafter securing such connection by coupling together said second 25 and fourth 44 coupling means.

With particular reference to figures 3 to 6, according to a preferred embodiment of the housing device 1 for electric/electronic equipment according to the present invention said fourth coupling means 44 conveniently comprise a cam and groove device which is movable between a first position in which it is not engaged with a corresponding seat 29 provided in the second coupling means 25 of the fixing plate 2 and a second position in which it is engaged with said seat 29.

With reference to figure 3, the cam and groove device preferably has an elongated body 71 with a first end 72 which is larger than the rest of the body and a second end 73 which is engageable with said seat 29. A groove being 74 is present on an intermediate portion 75 of said elongated body 71 between the first 72 and second 73 end thereof.

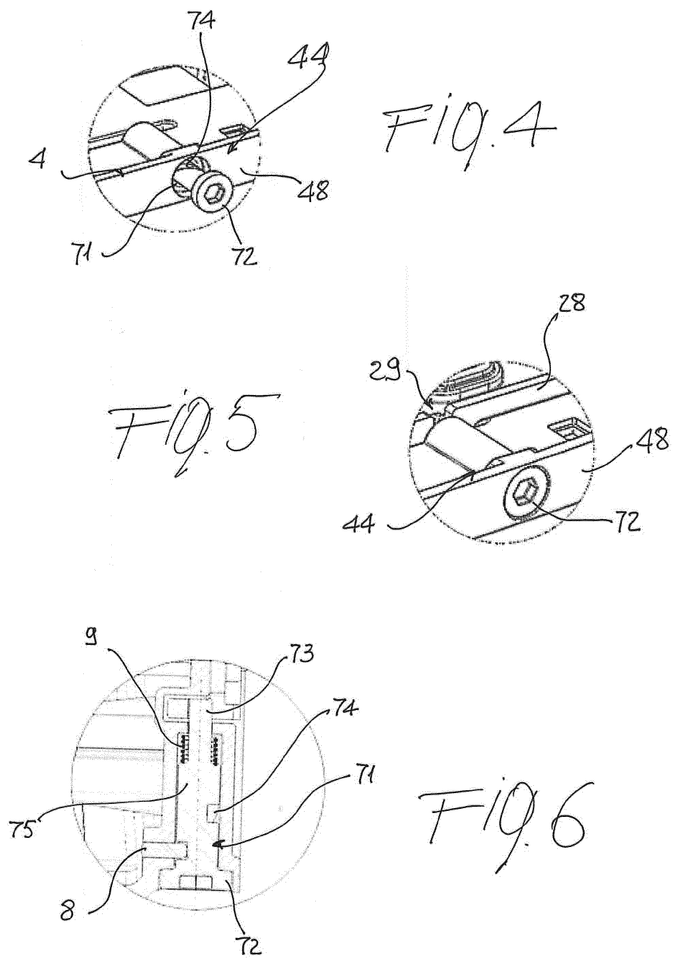

With reference to figures 4-6, the cam and groove device conveniently comprises also a guiding pin 8 which is fixed on the base 4 of said casing 3. The pin 8 is coupled with the groove 74 thereby guiding and maintaining into position during its cam and groove device. In practice, in the embodiment shown in the above-mentioned figure, by rotating the elongated body 71 counterclockwise it is inserted into the base 4 until when, as shown in figures 3 and 8, the second end 73 thereof is fully inserted into the seat 29 provided in the second coupling means 25 of the fixing plate 2. Conversely, by rotating the elongated body 71 clockwise it is extracted from the base 4 until when the pin 8 is in abutment against the end of the groove 74, as shown in figure 4.

With reference to figure 6, the outward movement of the cam and groove device can be forced by using spring means 9 pushing said cam and groove device toward the exterior of said base 4. In such a case, retaining systems can be foreseen to maintain the cam and groove device, e.g. a notch into the groove 74 into which the pin 8 engages when the elongated body is at the end of the insertion stroke and the second end 73 thereof is fully inserted into the seat 29 in the fixing plate 2.

The presence of the spring means 9 is particularly advantageous when the cam and groove device has an enlarged head 72 protruding from said base 4 when said cam and groove device is in its first position in which it is not engaged with the seat 29 in the fixing plate 2. Indeed in such a case the action of the spring means 9 keeps the enlarged head 72 of the cam and groove device protruding from the base 4 when the casing 3 is not coupled with the fixing plate 2. As shown in figure 10, the enlarged head 72 of said cam and groove device is couplable with the first coupling means 24 of the fixing plate 2. In particular, the enlarged head 72 of the cam and groove device is slidingly engageable in the shaped slot of said first coupling means 24 of the fixing plate 2, in the same way as previously described for the head 250 of the pin forming the first coupling means 24 of the device shown in figure 8.

In particular in the case of figure 9 and 10 the enlarged head 72 of the elongated body 71 is slidingly engageable in said shaped slot 24 which has a first portion larger than said head 72 and a second portion narrower than said head 72.

Preferably, the fourth coupling means 44 comprises actuating means for their actuation by an operator. In practice, the head 72 of the elongated body 71 can be provided with means for coupling with a screwdriver or an Allen key or similar other devices. Specifically designed heads, tailored to be used with specific tools, can conveniently be used so as to prevent, or at least make it more difficult, an unauthorized removal intervention.

From the above-description it is clear that device for electric/electronic equipment of the present invention fully achieved the intended aim and purposes, solving the prior art problems.

In particular, thanks to the different coupling possibilities among them of the coupling means it is possible to connect the fixing plate 2 and the casing 3 in at least two different relative positions. More in particular, in one of said positions, i.e. the first operative position, the coupling between the second and fourth coupling means prevents the un-coupling between the first and third coupling means thereby avoiding undesired or unauthorized disconnection between the fixing plate and the casing. In a second relative position, i.e. the second installation position, the coupling between the first and fourth coupling means ensures proper supporting of the casing by the fixing plate, thereby making installation quicker and easier.

Several variations can be made to housing device for electric/electronic equipment thus conceived, all falling within the scope of the attached claims. In practice, the materials used and the contingent dimensions and shapes can be any, according to requirements and to the state of the art.

## Claims

1. A housing device (1) for electric/electronic equipment comprising a fixing plate (2) suitable to be fixed onto a supporting surface and a casing (3) aimed at housing electric/electronic equipment, **characterized in that** said fixing plate (2) is provided with a first coupling surface (21) with said casing (3) having at least an opening (22) for the passage of a connection system for said electric/electronic equipment, the fixing plate (2) further comprising first fixing means (23) for fixing it onto said supporting surface and first (24) and second (25) coupling means for coupling with said casing (3), and further **characterized in that** said casing (3) comprises a base (4) and a cover (5), said base (4) having a second coupling surface (41) that can be coupled to said first coupling surface (21) of said fixing plate (2), the casing (3) further comprising third (43) and fourth (44) coupling means for coupling with said fixing plate (2), the casing (3) and the fixing plate (2) being connectable to each other in a first, operative, position in which said first (21) and second (41) coupling surfaces are coupled to each other and said first (24) and second (25) coupling means are respectively coupled with said third (43) and fourth (44) coupling means, the coupling between said second (25) and fourth (44) coupling means preventing the un-coupling between said first (24) and third (43) coupling means, the casing (3) and the fixing plate (2) being also connectable to each other in a second, installation, position in which said first (24) and fourth (44) coupling means are coupled to each other, said casing (3) is supported by said fixing plate (2) and said first (21) and second (41) coupling surfaces are substantially perpendicular to each other.

2. The housing device (1) for electric/electronic equipment according to claim 1, **characterized in that** the coupling between said second (25) and fourth (44) coupling means is possible only when the coupling between said first (24) and third (43) coupling means is completed.

3. The housing device (1) for electric/electronic equipment according to claim 1 or 2, **characterized in that** said first coupling means (24) are positioned on said first coupling surface (21) and said second coupling means (25) are positioned on an edge portion (28) of said fixing plate (2), and **in that** said third coupling means (43) are positioned on said second coupling surface (41) and said fourth coupling means (44) are positioned on an edge portion (48) of said base (4) of said casing (3).

4. The housing device (1) for electric/electronic equipment according to one or more of the previous claims, **characterized in that** said first fixing means (23) comprise one or more elongated slots.

5. The housing device (1) for electric/electronic equipment according to one or more of the previous claims, **characterized in that** said first coupling means (24) comprise a shaped slot and said third coupling means (43) comprises a snap-lock device slidingly engageable in said shaped slot.

6. The housing device (1) for electric/electronic equipment according to claim 5, **characterized in that** said third coupling means (43) comprises a pin with a head (250) engageable in said shaped slot which has a first portion larger than said head and a second portion narrower than said head (250).

7. The housing device (1) for electric/electronic equipment according to one or more of the previous claims, **characterized in that** said fourth coupling means (44) comprises a cam and groove device and said second coupling means (25) comprises a seat (29) for said cam and groove device which is movable between a first position in which it is not engaged with said seat (29) and a second position in which it is engaged with said seat (29).

8. The housing device (1) for electric/electronic equipment to claim 7, **characterized in that** said cam and groove device has an elongated body (71) with a first end (72) larger than the rest of the body and a second end (73) engageable with said seat, a groove being (74) present on an intermediate portion (75) of said elongated body (71) between said first (72) and second (73) end thereof.

9. The housing device (1) for electric/electronic equipment according to claim 8, **characterized in that** said cam and groove device comprises a guiding pin (8) fixed on said base (4) of said casing (3) coupled with said groove (74) and guiding and maintaining into position said cam and groove device, and spring means (9) forcing said cam and groove device toward the exterior of said base (4).

10. The housing device (1) for electric/electronic equipment according to according to one or more of claims 7-9, **characterized in that** said cam and groove device has an enlarged head (72) protruding from said base (4) when said cam and groove device is in said first position in which it is not engaged with said seat (29).

11. The housing device (1) for electric/electronic equipment according to claim 10, **characterized in that** said enlarged head (72) of said cam and groove device is couplable with said first coupling means (24) of said fixing plate (2).

12. The housing device (1) for electric/electronic equipment according to claims 10 and 5 or 6, **characterized in that** said enlarged head (72) of said cam and groove device is slidingly engageable in said shaped slot of said first coupling means (24) of said fixing plate (2).

13. The housing device (1) for electric/electronic equipment according to one or more of the previous claims, **characterized in that** said fourth coupling means (44) comprises actuating means for their actuation by an operator.
